# EUROPEAN PATENT SPECIFICATION

(11) **EP 3 398 905 B1**
(45) Date of publication and mention of the grant of the patent: **07.10.2020**
(21) Application number: 16880883.0
(22) Date of filing: 02.12.2016
(51) Int. Cl.: B65B 3/00, B65B 31/02, B65B 65/00, B67C 7/00, B65B 9/00, B65B 43/54, B25J 15/06, B25J 15/00, B25J 21/00, B25J 9/00, B65B 43/46, A61J 1/20, B65B 69/00, B65B 7/28, G07F 17/00

(54) **PREFILLED SYRINGE FILLING MACHINE**
FÜLLMASCHINE FÜR FERTIGSPRITZE
MACHINE DE REMPLISSAGE DE SERINGUE PRÉREMPLIE

(30) Priority: 31.12.2015 CN 201511014289
(43) Date of publication of application: 07.11.2018
(73) Proprietor: Truking Technology Limited, Changsha, Hunan 410600 (CN)
(72) Inventor: BAI, Tianqiao, Changsha Hunan 410600 (CN); CAI, Dayu, Changsha Hunan 410600 (CN); LI, Xinhua, Changsha Hunan 410600 (CN); PENG, Wei, Changsha Hunan 410600 (CN); ZHOU, Huaizhou, Changsha Hunan 410600 (CN)
(74) Representative: Proi World Intellectual Property GmbH
(86) International application number: PCT/CN2016/108369
(87) International publication number: WO 2017/114093

(56) References cited:
- WO-A1-2011/108446
- WO-A2-2015/023924
- CN-A- 102 470 933
- CN-A- 103 832 953
- CN-A- 104 495 732
- CN-A- 105 540 520
- CN-U- 205 313 054
- JP-A- 2012 116 495
- US-A1- 2011 067 781
- US-A1- 2012 090 268

## Description

### Field of the Invention

The present invention relates to medicine production equipment, and in particular to a prefilled syringe filling machine.

### Background of the Invention

In the prior art, a prefilled syringe filling machine is generally divided into three areas, namely an external package removal area, an internal package removal area and a filling and stoppering area, the external package removal area has different cleanliness level requirements from the internal package removal area and the filling and stoppering area, the internal package removal area and the filling and stoppering area are usually installed in an environment with a higher cleanliness level. The internal package removal area generally includes four stations of preheating, film tearing, lining paper striping and transferring, an unpacked prefilled syringe is conveyed by a conveyor belt to the filling and stoppering area, a feeding and discharging swing arm in the filling and stoppering area grabs a syringe tray, places the same onto a mobile platform and transfers the syringe tray to the filling and stoppering area, and the mobile platform conveys the syringe tray to a grabbing station of the feeding and discharging swing arm after the filling and stoppering are accomplished and conveys the tray to the conveyor belt to be output. The above technical solution has the problems of complicated structure, many stations, cleaning and maintenance difficulty, and a large risk of drug contamination caused by the large disturbance of the vertical flow in the high-level clean area when the components move, etc.

US 2012/0090268 A1 discloses a device for filling and sealing pharmaceutical containers.

### Summary of the Invention

The present invention provides a prefilled syringe filling machine according to independent claim 1. Various embodiments are recited in the dependent claims. The technical problem to be solved by the present invention is to overcome the shortcomings of the prior art and provide a prefilled syringe filling machine which has a simple structure and can effectively reduce the risk of drug contamination.
To solve the above technical problem, the present invention adopts the following technical solutions:
A prefilled syringe filling machine includes an external package removal area, an internal package removal area, a filling and stoppering area, a rubber plug buffer area and a conveyor belt, the conveyor belt penetrating through the internal package removal area from the external package removal area, and the filling and stoppering area being arranged to be adjacent to the internal package removal area, wherein a first transfer device is arranged in the internal package removal area; a second transfer device is arranged in the filling and stoppering area; a material delivery port is arranged between the filling and stoppering area and the internal package removal area, at work, the first transfer device transfers materials on the conveyor belt to the material delivery port so as to deliver the materials to the second transfer device, the second transfer device carries the materials and, after accomplishing filling and stoppering, transfers the materials to the material delivery port so as to deliver the materials to the first transfer device, and the first transfer device transfers the materials onto the conveyor belt.

As a further improvement of the above technical solution:
the external package removal area, the internal package removal area and the filling and stoppering area are linearly arranged successively, the conveyor belt extends to the outer side of the filling and stoppering area, and the rubber plug buffer area is arranged to be adjacent to the filling and stoppering area.

The first transfer device is a first transfer mechanical arm, and a transfer fixture capable of clamping the materials is installed on the first transfer mechanical arm. The second transfer device is a second transfer mechanical arm, and a hollow frame-shaped bracket capable of supporting the materials is installed on the second transfer mechanical arm.

A film tearing fixture and a lining paper removal fixture are further installed on the first transfer mechanical arm.

An internal package removal device is further arranged in the internal package removal area, and the internal package removal device includes a film tearing fixture and a lining paper removal fixture.

An empty material collection box and a waste material collection port are further arranged in the internal package removal area, and the empty material collection box is arranged on one side of the conveyor belt.

A filling component and a stoppering component are further installed on the second transfer mechanical arm.

A filling pump and a plug arrangement hopper are further arranged in the filling and stoppering area, the filling pump is connected with the second transfer mechanical arm, and the plug arrangement hopper is arranged between the rubber plug buffer area and the second transfer mechanical arm.

The conveyor belt is located on one side in the external package removal area and the internal package removal area.

Compared with the prior art, the present invention has the following advantages:
According to the prefilled syringe filling machine of the present invention, the conveyor belt does not penetrate through the filling and stoppering area, the material delivery port is arranged between the filling and stoppering area and the internal package removal area, and the delivery of the materials between the internal package removal area and the filling and stoppering area is achieved by the first transfer device and the second transfer device, so that the internal package removal area and the filling and stoppering area are relatively independent and the transfer of the materials between the two areas is not affected, thus the disturbance of the vertical flow in the high-level clean area during the input and output of the conveyor belt is avoided, and the risk of drug contamination is reduced.

### Brief Description of the Drawings

Fig.1 is a top view of a prefilled syringe filling machine of the present invention.
Fig.2 is a three-dimensional structural diagram of the prefilled syringe filling machine of the present invention.
Fig.3 is a three-dimensional structural diagram of the prefilled syringe filling machine of the present invention at another viewing angle.
Fig.4 is a schematic diagram of material delivery at a material delivery port of the prefilled syringe filling machine of the present invention.

### Reference signs:

1. external package removal area; 2. internal package removal area; 22. empty material collection box; 23. waste material collection port; 3. filling and stoppering area; 31. filling pump; 32. plug arrangement hopper; 4. rubber plug buffer area; 5. conveyor belt; 6. material delivery port; 7. first transfer device; 71. transfer fixture; 8. second transfer device; 81. hollow frame-shaped bracket.

### Detailed Description of the Embodiments

The present invention will be further described in detail below in conjunction with the accompanying drawings and specific embodiments.

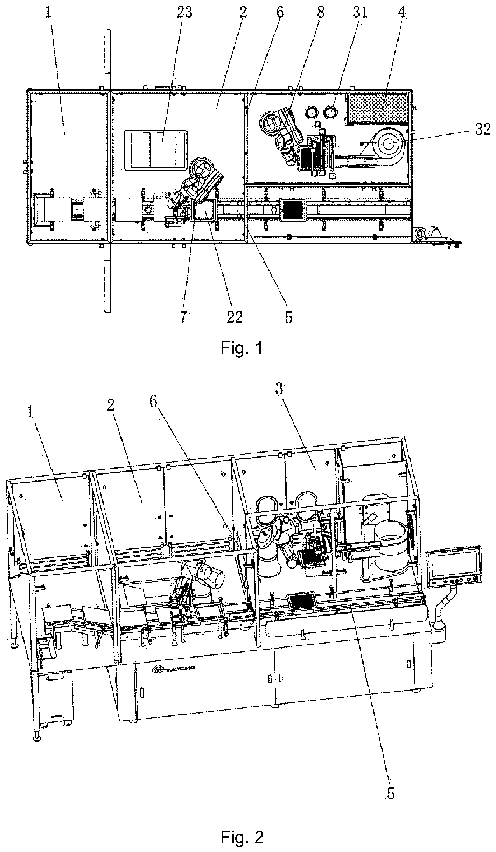

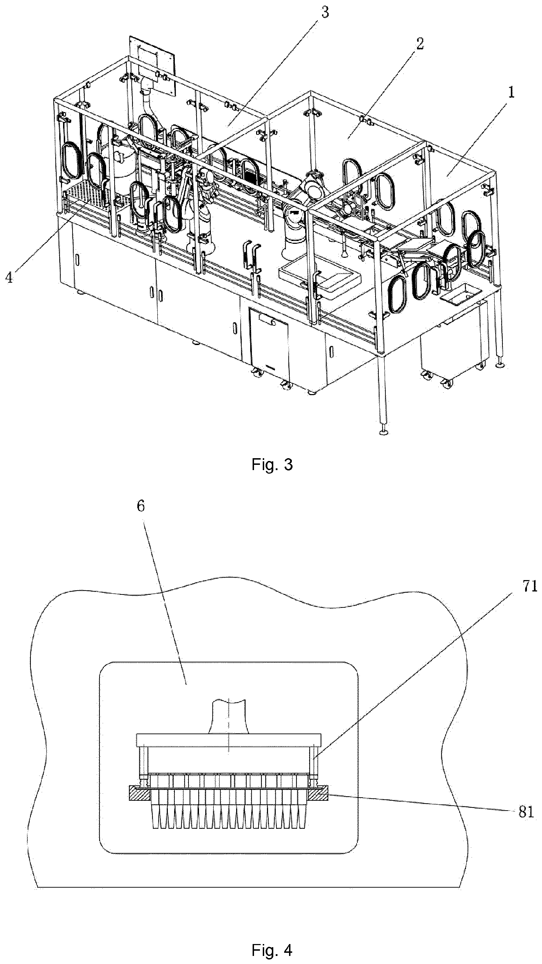

Figs. 1 to 4 show an embodiment of a prefilled syringe filling machine of the present invention. The prefilled syringe filling machine includes an external package removal area 1, an internal package removal area 2, a filling and stoppering area 3, a rubber plug buffer area 4 and a conveyor belt 5, the conveyor belt 5 penetrating through the internal package removal area 2 from the external package removal area 1, and the filling and stoppering area 3 being arranged to be adjacent to the internal package removal area 2, wherein a first transfer device 7 is arranged in the internal package removal area 2; a second transfer device 8 is arranged in the filling and stoppering area 3; a material delivery port 6 is arranged between the filling and stoppering area 3 and the internal package removal area 2; at work, the first transfer device 7 transfers materials on the conveyor belt 5 to the material delivery port 6 so as to deliver the materials to the second transfer device 8, and the second transfer device 8 carries the materials and, after accomplishing filling and stoppering, transfers the materials to the material delivery port 6 so as to deliver the materials to the first transfer device 7, and the first transfer device 7 transfers the materials onto the conveyor belt 5; the conveyor belt 5 does not penetrate through the filling and stoppering area 3, the material delivery port 6 is arranged between the filling and stoppering area 3 and the internal package removal area 2, the delivery of the materials between the internal package removal area 2 and the filling and stoppering area 3 is achieved by the first transfer device 7 and the second transfer device 8, so that the internal package removal area 2 and the filling and stoppering area 3 are relatively independent and the transfer of the materials between the two areas is not affected, thus the disturbance of the vertical flow in the high-level clean area during the input and output of the conveyor belt 5 is avoided, and the risk of drug contamination is reduced.

The materials in the present embodiment mainly refer to a prefilled syringe packaging box and a prefilled syringe tray.

In the present embodiment, the external package removal area 1, the internal package removal area 2 and the filling and stoppering area 3 are linearly arranged successively, the conveyor belt 5 extends to the outer side of the filling and stoppering area 3, and the rubber plug buffer area 4 is arranged to be adjacent to the filling and stoppering area 3.

In addition to the arrangement solution in the present embodiment, the filling and stoppering area can also be located between the external package removal area and the internal package removal area as long as it is arranged to be adjacent to the internal package removal area.

In the present embodiment, the first transfer device 7 is a first transfer mechanical arm, a transfer fixture 71 capable of clamping the materials is installed on the first transfer mechanical arm, the second transfer device 8 is a second transfer mechanical arm, a hollow frame-shaped bracket 81 capable of supporting the materials is installed on the second transfer mechanical arm, the transfer fixture 71 is moved to right above the prefilled syringe packaging box by the first transfer mechanical arm, the transfer fixture 71 is located to suck the prefilled syringe tray in the prefilled syringe packaging box, then the first transfer mechanical arm moves to convey the prefilled syringe tray to the material delivery port 6, meanwhile the second transfer mechanical arm drives the hollow frame-shaped bracket 81 to move to the material delivery port 6, and the hollow frame-shaped bracket 81 sleeves the prefilled syringe tray on the transfer fixture 71 from the lower side.

In the present embodiment, a film tearing fixture and a lining paper removal fixture are further installed on the first transfer mechanical arm, that is, film tearing and lining paper removal operations can be accomplished under the drive of the first transfer mechanical arm, thereby further simplifying the structure and reducing the transfer frequency of the materials.

In addition to the structures in the present embodiment, an internal package removal device can also be further arranged in the internal package removal area 2, and the internal package removal device includes a film tearing fixture and a lining paper removal fixture, that is, the transfer fixture 71, the film tearing fixture and the lining paper removal fixture are separately arranged.

In the present embodiment, an empty material collection box 22 and a waste material collection port 23 are further arranged in the internal package removal area 2, the empty material collection box 22 is arranged on one side of the conveyor belt 5, and after the hollow frame-shaped bracket 81 sleeves the prefilled syringe tray on the transfer fixture 71 from the lower side, the transfer fixture 71 conveys the prefilled syringe packaging box onto the conveyor belt 5 so as to convey the same into the empty material collection box 22, and the waste material collection port 23 is used for collecting external films and lining paper.

In the present embodiment, a filling component and a stoppering component are further installed on the second transfer mechanical arm, the hollow frame-shaped bracket 81 carries the prefilled syringe tray, and the filling component and the stoppering component perform filling and stoppering operations, thereby further simplifying the structure and reducing the transfer frequency of the prefilled syringe tray.

In the present embodiment, a filling pump 31 and a plug arrangement hopper 32 are further arranged in the filling and stoppering area 3, the filling pump 31 is connected with the second transfer mechanical arm, and the plug arrangement hopper 32 is arranged between the rubber plug buffer area 4 and the second transfer mechanical arm.

In the present embodiment, the conveyor belt 5 is located on one side in the external package removal area 1 and the internal package removal area 2 to facilitate picking and placing the materials.

## Claims

1. A prefilled syringe filling machine, comprising an external package removal area (1), an internal package removal area (2), a filling and stoppering area (3), a rubber plug buffer area (4) and a conveyor belt (5), **characterized in that** the external package removal area (1) has different cleanliness level requirements from the internal package removal area (2) and the filling and stoppering area (3); wherein the conveyor belt (5) penetrates through the internal package removal area (2) from the external package removal area (1) without penetrating through the filling and stoppering area (3), and the filling and stoppering area (3) being arranged to be adjacent to the internal package removal area (2), wherein a first transfer device (7) is arranged in the internal package removal area (2); a second transfer device (8) is arranged in the filling and stoppering area (3); a material delivery port (6) is arranged between the filling and stoppering area (3) and the internal package removal area (2); at work, the first transfer device (7) transfers materials on the conveyor belt (5) to the material delivery port (6) so as to deliver the materials to the second transfer device (8), the second transfer device (8) carries the materials and, after accomplishing filling and stoppering, transfers the materials to the material delivery port (6) so as to deliver the materials to the first transfer device (7), and the first transfer device (7) transfers the materials onto the conveyor belt (5).

2. The prefilled syringe filling machine of claim 1, wherein the external package removal area (1), the internal package removal area (2) and the filling and stoppering area (3) are linearly arranged successively, the conveyor belt (5) extends to the outer side of the filling and stoppering area (3), and the rubber plug buffer area (4) is arranged to be adjacent to the filling and stoppering area (3).

3. The prefilled syringe filling machine of claim 1, wherein the first transfer device (7) is a first transfer mechanical arm, and a transfer fixture (71) capable of clamping the materials is installed on the first transfer mechanical arm.

4. The prefilled syringe filling machine of claim 3, wherein the second transfer device (8) is a second transfer mechanical arm, and a hollow frame-shaped bracket (81) capable of supporting the materials is installed on the second transfer mechanical arm.

5. The prefilled syringe filling machine of claim 3, wherein a film tearing fixture and a lining paper removal fixture are further installed on the first transfer mechanical arm.

6. The prefilled syringe filling machine of claim 3, wherein an internal package removal device is further arranged in the internal package removal area (2), and the internal package removal device comprises a film tearing fixture and a lining paper removal fixture.

7. The prefilled syringe filling machine of claim 1, wherein an empty material collection box (22) and a waste material collection port (23) are further arranged in the internal package removal area (2), and the empty material collection box (22) is arranged on one side of the conveyor belt (5).

8. The prefilled syringe filling machine of claim 4, wherein a filling component and a stoppering component are further installed on the second transfer mechanical arm.

9. The prefilled syringe filling machine of claim 8, wherein a filling pump (31) and a plug arrangement hopper (32) are further arranged in the filling and stoppering area (3), the filling pump (31) is connected with the second transfer mechanical arm, and the plug arrangement hopper (32) is arranged between the rubber plug buffer area (4) and the second transfer mechanical arm.

10. The prefilled syringe filling machine of any of claims 1-9, wherein the conveyor belt (5) is located on one side in the external package removal area (1) and the internal package removal area (2).

## Patentansprüche

1. Vorgefüllte Spritzenfüllmaschine, umfassend einen äußeren Packungsentfernungsbereich (1), einen inneren Packungsentfernungsbereich (2), einen Füll- und Verschlussbereich (3), einen Gummistopfen-Pufferbereich (4) und ein Förderband (5),
**dadurch gekennzeichnet, dass**
der äußere Packungsentfernungsbereich (1) andere Sauberkeitsanforderungen als der innere Packungsentfernungsbereich (2) und der Füll- und Verschlussbereich (3) hat; wobei das Förderband (5) durch den inneren Packungsentfernungsbereich (2) von dem äußeren Packungsentfernungsbereich (1) dringt, ohne den Füll- und Verschlussbereich (3) zu durchdringen, und wobei der Füll- und Verschlussbereich (3) so angeordnet ist, dass er an den inneren Packungsentfernungsbereich (2) angrenzt, wobei eine erste Übertragungsvorrichtung (7) in dem inneren Packungsentfernungsbereich (2) angeordnet ist; eine zweite Überführungsvorrichtung (8) in dem Füll- und Verschlussbereich (3) angeordnet ist; eine Materialabgabeöffnung (6) zwischen dem Füll- und Verschlussbereich (3) und dem inneren Verpackungsentfernungsbereich (2) angeordnet ist; im Betriebsmodus überträgt die erste Übergabevorrichtung (7) Materialien auf dem Förderband (5) zu der Materialausgabeöffnung (6), um die Materialien an die zweite Übergabevorrichtung (8) zu liefern, die zweite Übergabevorrichtung (8) trägt die Materialien und übergibt die Materialien, nachdem sie das Füllen und Stoppen durchgeführt hat, an die Materialausgabeöffnung (6), um die Materialien an die erste Übergabevorrichtung (7) zu liefern, und die erste Übergabevorrichtung (7) übergibt die Materialien auf das Förderband (5).

2. Vorgefüllte Spritzenfüllmaschine nach Anspruch 1, wobei der äußere Verpackungsentfernungsbereich (1), der innere Verpackungsentfernungsbereich (2) und der Füll- und Verschlußbereich (3) linear aufeinanderfolgend angeordnet sind, das Förderband (5) sich zur Außenseite des Füll- und Verschlußbereichs (3) erstreckt und der Gummistopfen-Pufferbereich (4) so angeordnet ist, dass er an den Füll- und Verschlußbereich (3) angrenzt.

3. Vorgefüllte Spritzenfüllmaschine nach Anspruch 1, wobei die erste Transfervorrichtung (7) ein erster mechanischer Transferarm ist und eine Transferbefestigung (71), die in der Lage ist, die Materialien zu klemmen, auf dem ersten mechanischen Transferarm installiert ist.

4. Vorgefüllte Spritzenfüllmaschine nach Anspruch 3, wobei die zweite Übertragungsvorrichtung (8) ein zweiter mechanischer Übertragungsarm ist und eine hohle rahmenförmige Halterung (81), die in der Lage ist, die Materialien zu halten, auf dem zweiten mechanischen Übertragungsarm installiert ist.

5. Vorgefüllte Spritzenfüllmaschine nach Anspruch 3, bei der eine Folienabreißvorrichtung und eine Vorrichtung zum Entfernen des Auskleidungspapiers weiterhin auf dem ersten mechanischen Übertragungsarm installiert sind.

6. Vorgefüllte Spritzenfüllmaschine nach Anspruch 3, wobei eine interne Verpackungsentfernungsvorrichtung ferner in dem internen Verpackungsentfernungsbereich (2) angeordnet ist und die interne Verpackungsentfernungsvorrichtung eine Folienabreißvorrichtung und eine Vorrichtung zum Entfernen des Auskleidungspapiers umfasst.

7. Vorgefüllte Spritzenfüllmaschine nach Anspruch 1, wobei ein Leermaterial-Sammelbehälter (22) und eine Abfallmaterial-Sammelöffnung (23) weiter im inneren Verpackungsentfernungsbereich (2) angeordnet sind und der Leermaterial-Sammelbehälter (22) auf einer Seite des Förderbandes (5) angeordnet ist.

8. Vorgefüllte Spritzenfüllmaschine nach Anspruch 4, bei der eine Füllkomponente und eine Verschlusskomponente ferner auf dem zweiten mechanischen Transferarm installiert sind.

9. Vorgefüllte Spritzenfüllmaschine nach Anspruch 8, bei der eine Füllpumpe (31) und ein Stopfenanordnungsmagazin (32) weiter im Füll- und Verschlussbereich (3) angeordnet sind, die Füllpumpe (31) mit dem zweiten mechanischen Übertragungsarm verbunden ist und das Stopfenanordnungsmagazin (32) zwischen dem Gummistopfen-Pufferbereich (4) und dem zweiten mechanischen Übertragungsarm angeordnet ist.

10. Vorgefüllte Spritzenfüllmaschine nach einem der Ansprüche 1-9, wobei das Förderband (5) auf einer Seite im äußeren Verpackungsentfernungsbereich (1) und im inneren Verpackungsentfernungsbereich (2) angeordnet ist.

## Revendications

1. Machine de remplissage de seringues préremplies, comprenant une zone externe de retrait de l'emballage (1), une zone interne de retrait de l'emballage (2), une zone de remplissage et de bouchage (3), une zone tampon de bouchon en caoutchouc (4) et une bande transporteuse (5), **caractérisée en ce que** la zone externe de retrait de l'emballage (1) a des exigences de niveau de propreté différentes de celles de la zone interne de retrait de l'emballage (2) et de la zone de remplissage et de bouchage (3) ; dans lequel la courroie transporteuse (5) pénètre à travers la zone interne d'enlèvement de l'emballage (2) depuis la zone externe d'enlèvement de l'emballage (1) sans pénétrer à travers la zone de remplissage et de bouchage (3), et la zone de remplissage et de bouchage (3) étant agencée pour être adjacente à la zone interne d'enlèvement de l'emballage (2), dans lequel un premier dispositif de transfert (7) est agencé dans la zone interne d'enlèvement de l'emballage (2) ; un deuxième dispositif de transfert (8) est disposé dans la zone de remplissage et de bouchage (3) ; un orifice de distribution de matériau (6) est disposé entre la zone de remplissage et de bouchage (3) et la zone de retrait de l'emballage interne (2) ; au travail, le premier dispositif de transfert (7) transfère les matériaux sur la bande transporteuse (5) vers l'orifice de livraison des matériaux (6) afin de livrer les matériaux au deuxième dispositif de transfert (8), le deuxième dispositif de transfert (8) transporte les matériaux et, après avoir effectué le remplissage et le bouchage, transfère les matériaux vers l'orifice de livraison des matériaux (6) afin de livrer les matériaux au premier dispositif de transfert (7), et le premier dispositif de transfert (7) transfère les matériaux sur la bande transporteuse (5).

2. Machine de remplissage de seringues préremplies selon la revendication 1, dans laquelle la zone externe d'enlèvement de l'emballage (1), la zone interne d'enlèvement de l'emballage (2) et la zone de remplissage et de bouchage (3) sont disposées de manière linéaire et successive, la courroie transporteuse (5) s'étend jusqu'au côté externe de la zone de remplissage et de bouchage (3), et la zone tampon du bouchon en caoutchouc (4) est disposée de manière à être adjacente à la zone de remplissage et de bouchage (3).

3. Machine de remplissage de seringues préremplies selon la revendication 1, dans laquelle le premier dispositif de transfert (7) est un premier bras mécanique de transfert, et un dispositif de transfert (71) capable de serrer les matériaux est installé sur le premier bras mécanique de transfert.

4. Machine de remplissage de seringues préremplies selon la revendication 3, dans laquelle le deuxième dispositif de transfert (8) est un deuxième bras mécanique de transfert, et un support creux en forme de cadre (81) capable de supporter les matériaux est installé sur le deuxième bras mécanique de transfert.

5. Machine de remplissage de seringues préremplies selon la revendication 3, dans laquelle un dispositif de déchirement de film et un dispositif d'enlèvement de papier de revêtement sont en outre installés sur le premier bras mécanique de transfert.

6. Machine de remplissage de seringues préremplies selon la revendication 3, dans laquelle un dispositif d'enlèvement de l'emballage interne est en outre disposé dans la zone d'enlèvement de l'emballage interne (2), et le dispositif d'enlèvement de l'emballage interne comprend un dispositif de déchirement du film et un dispositif d'enlèvement du papier de revêtement.

7. Machine de remplissage de seringues préremplies selon la revendication 1, dans laquelle une boîte de collecte de matériaux vides (22) et un orifice de collecte de déchets (23) sont en outre disposés dans la zone d'enlèvement d'emballage interne (2), et la boîte de collecte de matériaux vides (22) est disposée sur un côté de la bande transporteuse (5).

8. Machine de remplissage de seringues préremplies de la revendication 4, dans laquelle un composant de remplissage et un composant de bouchage sont en outre installés sur le deuxième bras mécanique de transfert.

9. Machine de remplissage de seringues préremplies selon la revendication 8, dans laquelle une pompe de remplissage (31) et une trémie de bouchage (32) sont en outre disposées dans la zone de remplissage et de bouchage (3), la pompe de remplissage (31) est reliée au deuxième bras mécanique de transfert et la trémie de bouchage (32) est disposée entre la zone tampon de bouchage en caoutchouc (4) et le deuxième bras mécanique de transfert.

10. Machine de remplissage de seringues préremplies de l'une des revendications 1 à 9, dans laquelle la bande transporteuse (5) est située d'un côté dans la zone externe de retrait des emballages (1) et la zone interne de retrait des emballages (2).
